# EUROPEAN PATENT APPLICATION

(11) **EP 4 456 634 A1**
(43) Date of publication of application: **30.10.2024**
(21) Application number: 22909963.5
(22) Date of filing: 20.12.2022
(51) Int. Cl.: H04W 72/04

(54) **TRANSMISSION METHOD, TERMINAL, AND NETWORK-SIDE DEVICE**

(30) Priority: 22.12.2021 CN 202111583426
(71) Applicant: VIVO MOBILE COMMUNICATION CO., LTD., Dongguan, Guangdong 523863 (CN)
(72) Inventor: GU, Yi, Dongguan, Guangdong 523863 (CN); PAN, Xueming, Dongguan, Guangdong 523863 (CN); WU, Kai, Dongguan, Guangdong 523863 (CN); WANG, Lihui, Dongguan, Guangdong 523863 (CN); RAKESH, Tamrakar, Dongguan, Guangdong 523863 (CN)
(74) Representative: Murgitroyd & Company
(86) International application number: PCT/CN2022/140199
(87) International publication number: WO 2023/116651

(57) **Abstract**

This application discloses a transmission method, a terminal, and a network-side device, and relates to the field of communication technologies. The transmission method in the embodiments of this application includes: receiving, by a terminal, first signaling sent by the network-side device, where the first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform.

## Description

### CROSS-REFERENCE TO RELATED APPLICATION

This application claims priority to Chinese Patent Application No. 202111583426.0, filed with China National Intellectual Property Administration on December 22, 2021 and entitled "TRANSMISSION METHOD, TERMINAL, AND NETWORK-SIDE DEVICE", which is incorporated herein by reference in its entirety.

### TECHNICAL FIELD

This application relates to the field of communication technologies, and specifically, to a transmission method, a terminal, and a network-side device.

### BACKGROUND

Waveform switch is an important uplink enhancement technology applied to a wireless communication system. Through dynamic switch between a cyclic prefix orthogonal frequency division multiplexing (CP-OFDM) waveform and a discrete Fourier transform spread orthogonal frequency division multiplexing (DFT-S-OFDM) waveform, a terminal may select a suitable waveform for transmission under a corresponding channel state condition.

In the related art, waveform switch is implemented in a semi-static manner, and the terminal can only perform transmission based on a current waveform configuration, which has a low update speed and affects transmission performance of the terminal.

### SUMMARY

Embodiments of this application provide a transmission method, a terminal, and a network-side device, which can improve transmission performance of the terminal.

According to a first aspect, a transmission method is provided. The method includes:
receiving, by a terminal, first signaling sent by a network-side device, where the first signaling includes at least one of the following:
dynamic waveform switch enabling indication information, used for enabling dynamic waveform switch;
dynamic waveform switch indication information, used for indicating execution of waveform switch; and
waveform indication information, used for indicating a switched waveform; and
performing, by the terminal, uplink transmission based on a waveform determined by the first signaling.

According to a second aspect, a transmission method is provided. The method includes:
transmitting, by a network-side device, first signaling to a terminal, where
the first signaling includes at least one of the following:
   dynamic waveform switch enabling indication information, used for enabling dynamic waveform switch;
   dynamic waveform switch indication information, used for indicating execution of waveform switch; and
   waveform indication information, used for indicating a switched waveform.

According to a third aspect, a transmission apparatus is provided, including:
a first receiving module, configured to receive first signaling sent by a network-side device, where
the first signaling includes at least one of the following:
   dynamic waveform switch enabling indication information, used for enabling dynamic waveform switch;
   dynamic waveform switch indication information, used for indicating execution of waveform switch;
   waveform indication information, used for indicating a switched waveform; and
   a transmission module, configured to perform uplink transmission based on a waveform determined by the first signaling.

According to a fourth aspect, a transmission apparatus is provided, including:
a second sending module, configured to send first signaling to a terminal, where
the first signaling includes at least one of the following:
   dynamic waveform switch enabling indication information, used for enabling dynamic waveform switch;
   dynamic waveform switch indication information, used for indicating execution of waveform switch; and
   waveform indication information, used for indicating a switched waveform.

According to a fifth aspect, a terminal is provided. The terminal includes a processor and a memory, a program or instructions stored in the memory and executable on the processor, wherein when the program or the instructions are executed by the processor, steps of the method according to the first aspect are implemented.

According to a sixth aspect, a terminal is provided, including a processor and a communication interface, where the communication interface is configured to:
receive first signaling sent by a network-side device, where the first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform; and
perform uplink transmission based on a waveform determined by the first signaling.

According to a seventh aspect, a network-side device is provided. The network-side device includes a processor, a memory, and a program or instructions stored in the memory and executable on the processor, wherein when the program or the instructions are executed by the processor, steps of the method according to the first aspect are implemented.

According to an eighth aspect, a network-side device is provided, including a processor and a communication interface, where the communication interface is configured to send first signaling to a terminal; and
the first signaling includes at least one of the following:
dynamic waveform switch enabling indication information, used for enabling dynamic waveform switch;
dynamic waveform switch indication information, used for indicating execution of waveform switch; and
waveform indication information, used for indicating a switched waveform.

According to a ninth aspect, an information indication system is provided, including: a terminal and a network-side device, where the terminal may be configured to perform steps of the method according to the first aspect, and the network-side device may be configured to perform steps of the method according to the second aspect.

According to a tenth aspect, a readable storage medium is provided. The readable storage medium stores a program or instructions, the program or the instructions, when executed by a processor, implementing steps of the method according to the first aspect, or implementing steps of the method according to the second aspect.

According to an eleventh aspect, a chip is provided. The chip includes a processor and a communication interface, where the communication interface is coupled to the processor, and the processor is configured to run a program or instructions, to implement the method according to the first aspect, or implement the method according to the second aspect.

According to a twelfth aspect, a computer program/program product is provided, where the computer program/program product is stored in a storage medium and executed by at least one processor to implement steps of the method according to the first aspect, or to implement steps of the method according to the second aspect.

In the embodiments of this application, after receiving the first signaling sent by the network-side device, the terminal may obtain at least one of the following through parsing the first signaling: dynamic waveform switch enabling indication information, dynamic waveform switch indication information, and waveform indication information. Then, the terminal performs uplink transmission based on the waveform determined by the first signaling, which can effectively improve transmission performance of the terminal.

### BRIEF DESCRIPTION OF THE DRAWINGS

FIG. 1 is a schematic diagram of a wireless communication system to which an embodiment of this application is applicable;
FIG. 2 is a schematic flowchart 1 of a transmission method according to an embodiment of this application;
FIG. 3 is a schematic diagram 1 of a time sequence relationship and a scheduling process according to an embodiment of this application;
FIG. 4 is a schematic diagram 2 of a time sequence relationship and a scheduling process according to an embodiment of this application;
FIG. 5 is a schematic flowchart 2 of a transmission method according to an embodiment of this application;
FIG. 6 is a schematic structural diagram 1 of a transmission apparatus according to an embodiment of this application;
FIG. 7 is a schematic structural diagram 2 of a transmission apparatus according to an embodiment of this application;
FIG. 8 is a schematic structural diagram of a communication device according to an embodiment of this application;
FIG. 9 is a schematic structural diagram of a terminal according to embodiments of this application; and
FIG. 10 is a schematic structural diagram of a network-side device according to an embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

The specification and claims of this application, and terms "first" and "second" are used to distinguish similar objects, but are unnecessarily used to describe a specific sequence or order. It should be understood that the terms in such a way are interchangeable in proper circumstances, so that the embodiments of this application can be implemented in other orders than the order illustrated or described herein. Objects distinguished by "first", "second", and the like are usually one type, and a quantity of objects is not limited. For example, a first object may be one or more than one. In addition, in the specification and the claims, "and/or" represents at least one of connected objects, and the character "/" generally represents an "or" relationship between associated objects.

It should be noted that, the technologies described in the embodiments of this application are not limited to a long term evolution (Long Term Evolution, LTE)/an LTE-Advanced (LTE-Advanced, LTE-A) system, and may further be applied to other wireless communication systems, such as, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency Division Multiple Access (Single-carrier Frequency Division Multiple Access, SC-FDMA), and other systems. The terms "system" and "network" may usually be used interchangeably in the embodiments of this application. The described technology can be applied to the systems and radio technologies mentioned above, and can also be applied to other systems and radio technologies. The following description describes a new radio (New Radio, NR) system for example objectives, and NR terms are used in most of the description below, although these technologies are also applicable to communication systems other than NR system applications, such as a 6-th generation (6-th Generation, 6G) communication system.

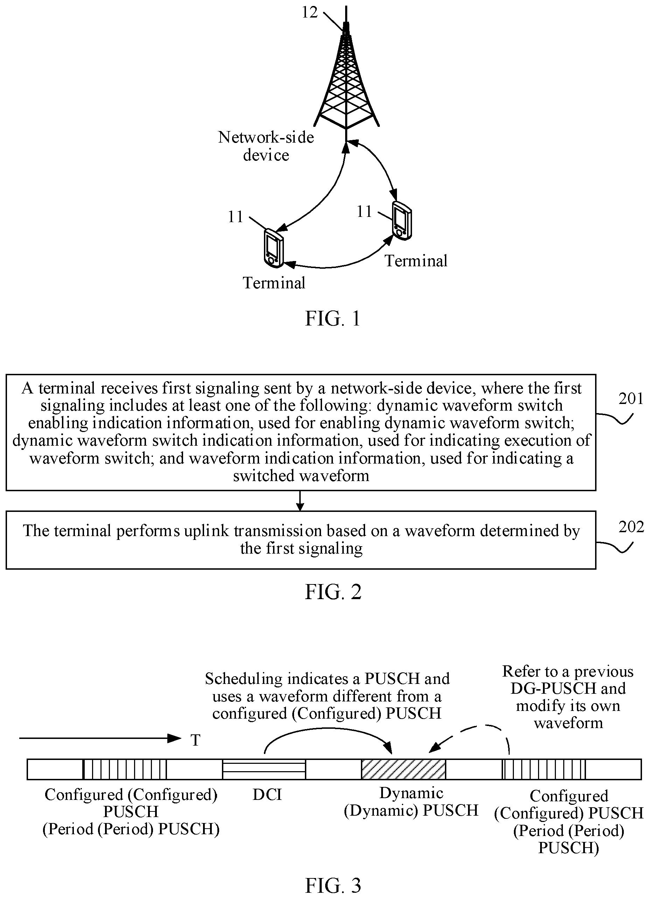

FIG. 1 is a schematic diagram of a wireless communication system to which an embodiment of this application is applicable. The wireless communication system shown in FIG. 1 includes a terminal 11 and a network-side device 12. The terminal 11 may be terminal-side devices such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/a virtual reality (virtual reality, VR) device, a robot, a wearable device (Wearable Device), an in-vehicle device (VUE), a pedestrian terminal (PUE), smart home appliances (home devices having a wireless communication function, for example, a refrigerator, a television, a washing machine, or furniture), a game machine, a personal computer (personal computer, PC), a teller machine, or a self-service machine. The wearable device includes: a smart watch, a smart wristband, smart headphones, smart glasses, smart jewelry (a smart bangle, a smart bracelet, a smart ring, a smart necklace, a smart anklet bangle, a smart anklet, and the like), a smart wrist strap, smart clothes, and the like. It should be noted that a specific type of the terminal 11 is not limited in the embodiments of this application. The network-side device 12 may include an access network device or a core network device, where the access network device 12 may further be referred to as a radio access network device, a radio access network (Radio Access Network, RAN), a radio access network function, or a radio access network unit. The access network device 12 may include a base station, a WLAN access point, or a WIFI node, where the base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP) or some other suitable terms in the field. As long as the same technical effect is achieved, the base station is not limited to a specific technical word. It should be noted that, only a base station in the NR system is used as an example for description, and a specific type of the base station is not limited in the embodiments of this application.

The transmission method provided in the embodiments of this application is described in detail below through some embodiments and application scenarios thereof with reference to the accompanying drawings.

The embodiments of this application provide an information transmission method. The information transmission method may be applied to a wireless communication system that supports dynamic waveform switch. After receiving the first signaling sent by the network-side device, the terminal may obtain at least one of the following through parsing the first signaling: dynamic waveform switch enabling indication information, dynamic waveform switch indication information, and waveform indication information. Then, the terminal performs uplink transmission based on the waveform determined by the first signaling, which can effectively improve transmission performance of the terminal.

For example, when a channel condition is good, the network-side device may indicate the terminal to perform uplink transmission by using a CP-OFDM waveform with a higher transmission rate. However, when the channel condition is poor, for example, the terminal is at a cell edge and a signal is weak, to effectively ensure service transmission performance, the network-side device sends the dynamic waveform switch indication information or the waveform indication information to the terminal, so that the terminal switches from the CP-OFDM waveform to the DFT-S-OFDM waveform, to further perform uplink transmission by using the DFT-S-OFDM waveform.

FIG. 2 is a schematic flowchart 1 of a transmission method according to an embodiment of this application. As shown in FIG. 2, the method includes:
Step 201: A terminal receives first signaling sent by a network-side device, where the first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform.

Step 202: The terminal performs uplink transmission based on a waveform determined by the first signaling.

It should be noted that, the embodiments of this application may be applied to the wireless communication system that supports the dynamic waveform switch, and the terminal supports the dynamic waveform switch. The terminal includes, but not limited to, the types of terminals 11 listed above, and the network-side device includes, but not limited to, the types of network-side devices 12 listed above. This is not limited in this application. It may be understood that, the embodiments of this application may further be used in a scenario with an unlicensed (unlicense) frequency band.

Optionally, the switched waveform may include a CP-OFDM waveform or a DFT-S-OFDM waveform. It may be understood that, the switched waveform may be a waveform used by a physical uplink shared channel (Physical Uplink Shared Channel, PUSCH) for the terminal to send uplink data to the network-side device, or may be a waveform used for physical sidelink share channel (Physical Sidelink Share Channel, PSSCH) transmission for sidelink (Sidelink) communication between terminals.

In the embodiments of this application, the uplink transmission may include at least one of the following:
1. Dynamic grant (Dynamic grant, DG) PUSCH transmission
   Specifically, the DG PUSCH transmission includes: DG-PUSCH with UL-SCH and/or DG-PUSCH without UL-SCH, for example, DG-PUSCH transmission carrying only A-CSI.
2. Configured grant type 1 (Configured grant Type 1, CG Type 1) PUSCH transmission;
3. Configured grant type 2 (Configured grant Type 2, CG Type 2) PUSCH transmission;
4. Message 3 (Msg.3) transmission scheduled by random access response (Random Access Response, RAR) uplink grant (UL grant);
5. PUSCH transmission scheduled by a downlink control information format 0_0 (DCI format 0_0) scrambled by a temporary cell radio network temporary identifier (Temporary Cell Radio Network Temporary Identifier, TC-RNTI);
6. Physical uplink control channel (Physical Uplink Control Channel, PUCCH) transmission;
7. PSSCH transmission for sidelink communication; and
8. Physical sidelink control channel (physical sidelink control channel, PSCCH) transmission for sidelink communication.

That is, the first signaling is applied to at least one of data transmissions (transmission) in 1 to 8 above.

In practice, in addition to being carried in the first signaling, the dynamic waveform switch enabling indication information may alternatively be indicated by using at least one of the following:
1. The terminal is configured by default as enabling waveform switch.
2. The terminal receives second signaling sent by the network-side device, where the second signaling is used for enabling the dynamic waveform switch, and the terminal enables the waveform switch in response to the second signaling. Specifically, the second signaling may include: radio resource control (Radio Resource Control, RRC). For example, CG Type 1 PUSCH transmission may be configured based on RRC signaling.

Optionally, the terminal may report capability information to the network-side device, where the capability information is used for indicating that the terminal supports dynamic waveform switch. In this case, the terminal enables waveform switch by default, and the network-side device does not need to specifically indicate the terminal to enable dynamic waveform switch.

Alternatively, the terminal may report capability information to the network-side device, where the capability information is used for indicating that the terminal supports dynamic waveform switch. In this case, the terminal needs to receive second signaling sent by the network-side device, where the second signaling is used for enabling dynamic waveform switch, and the terminal enables waveform switch in response to the second signaling.

In the transmission method provided in the embodiments of this application, after receiving the first signaling sent by the network-side device, the terminal may obtain at least one of the following through parsing the first signaling: dynamic waveform switch enabling indication information, dynamic waveform switch indication information, and waveform indication information. Then, the terminal performs dynamic waveform switch, and after the dynamic waveform switch is completed, the switched waveform is used for uplink transmission. In this way, transmission performance of the terminal can be effectively improved.

A specific implementation of the first signaling in the embodiments of this application is described below. The implementation of the first signaling may include any one of the following:
Manner 1. The first signaling includes: first downlink control information (Downlink Control Information, DCI), the first DCI is used for scheduling a single UE to perform dynamic waveform switch, where the first DCI includes at least one of the following: the dynamic waveform switch enabling indication information; the dynamic waveform switch indication information; and the waveform indication information.

Manner 2. The first signaling includes: second DCI, the second DCI is a group common (Group common) DCI, where the second DCI is used for indicating at least one terminal to perform waveform switch; and the second DCI includes at least one of the following: the dynamic waveform switch enabling indication information; the dynamic waveform switch indication information; and the waveform indication information.

Manner 3. The first signaling includes: third DCI, the third DCI is used for scheduling terminals corresponding to a plurality of PUSCHs of at least one cell in a cell group or at least one carrier in a carrier group to perform dynamic waveform switch; and the third DCI includes at least one of the following: the dynamic waveform switch enabling indication information; the dynamic waveform switch indication information; and the waveform indication information.

Herein, the foregoing three manners are separately described:

For Manner 1, the first signaling includes the first DCI, where the first DCI is used for scheduling a single UE to perform dynamic waveform switch, and the first DCI includes at least one of the following: the dynamic waveform switch enabling indication information; the dynamic waveform switch indication information; and the waveform indication information.

A carrying manner of each indication information in the first DCI may include at least one of the following:
1. An additional new field in the first DCI includes at least one of the following: the dynamic waveform switch enabling indication information; the dynamic waveform switch indication information; and the waveform indication information.
2. A target field of the first DCI includes at least one of the following: the dynamic waveform switch enabling indication information; the dynamic waveform switch indication information; and the waveform indication information.

Optionally, a manner in which each indication information is carried in the target field in the first DCI may include at least one of the following:
a. The target field of the first DCI include: a frequency domain resource allocation (frequency domain resource allocation, FDRA) field.

Specifically, the FDRA field includes N1 bits and N2 bits, where the N1 bits are used to indicate a frequency domain resource allocation manner, the N1 bits and the N2 bits are used to carry the dynamic waveform switch indication information or the waveform indication information, and N1 and N2 are both positive integers. For example, in a case that a frequency domain resource allocation manner configured by the terminal on the network-side device is dynamic switch, an additional 1 bit is added to an existing size of the FDRA field in the first DCI, and 2 bits in the FDRA field are used to simultaneously indicate the frequency domain resource allocation manner and the dynamic waveform switch indication information, or simultaneously indicate the frequency domain resource allocation manner and the waveform indication information, as shown in Table 1.

**Table 1**

| **MSB bits(add)** | **FDRA type** | **waveform** | **Waveform change** |
|---|---|---|---|
| 00 | 0 | CP | NO |
| 01 | 0 | DFT | YES |
| 10 | 1 | CP | NO |
| 11 | 1 | DFT | YES |

Alternatively, the FDRA field includes N3 bits, where the N3 bits are used to indicate a frequency domain resource allocation manner, the N3 bits are used to carry the dynamic waveform switch indication information or the waveform indication information, and N3 is a positive integer. In practice, the N3 bits may be N3 least significant bits (Least Significant Bit, LSB) or the most significant bits (Most Significant Bit, MSB). For example, in a case that the frequency domain resource allocation manner configured by the terminal on the network-side device is dynamic switch, in the existing size of the FDRA field, 1-bit MSB used for indicating the frequency domain resource allocation manner is reused, and the 1-bit MSB in the FDRA field is used to simultaneously indicate the frequency domain resource allocation manner and the dynamic waveform switch indication information, or simultaneously indicate the frequency domain resource allocation manner and the waveform indication information. Alternatively, in addition to simultaneously indicating FDRA and the dynamic waveform switch indication information or the waveform indication information, the terminal may further refer to field information, for example, MCS information, as shown in Table 2, of some other fields in the first DCI to assist in determining final uplink transmission waveform information.

**Table 2**

| **MSB bits(reuse)** | **FDRA type** | **waveform** | **Waveform change** | **Others reference factor(eg.MCS)** |
|---|---|---|---|---|
| 0 | 0 | CP | NO | MCS>QPSK |
| 0 | 0 | DFT | NO | MCS<=QPSK |
| 1 | 1 | CP | YES | MCS>QPSK |
| 1 | 1 | DFT | YES | MCS<=QPSK |

In a case of hopping disable, the first MSB is used to indicate the frequency domain resource allocation manner and/or dynamic waveform switch or the waveform indication information. In a case of hopping enable, the MSB is postponed and the first valid MSB bit after indication by the frequency hopping offset is used to indicate the frequency domain resource allocation manner and/or dynamic waveform switch or the waveform indication information. For example, the third MSB bit is used for indication. Optionally, in the case of hopping disable, the network-side device configures the CP-OFDM waveform for the terminal.

In practice, after the terminal receives the first signaling sent by the network-side device, and in a case that the switched waveform indicated by the network-side device does not match a current transmission capability of the terminal or a current frequency domain resource allocation manner of the terminal, the terminal does not expect the network-side device to simultaneously configure the switched waveform and the frequency domain resource allocation manner, or does not expect the network-side device to simultaneously configure the switched waveform and the transmission capability.

Alternatively, after the terminal receives the first signaling sent by the network-side device, and in a case that the switched waveform indicated by the network-side device does not match a current transmission capability of the terminal or a current frequency domain resource allocation manner of the terminal, the terminal determines the switched waveform or the frequency domain resource allocation manner based on predefined or preconfigured priority information. In this case, in a case that the terminal decides to use the switched waveform indicated by the network-side device based on the predefined or preconfigured priority information, the current frequency domain resource allocation manner of the terminal is adjusted to adapt to current transmission. However, in a case that the terminal decides to use the current frequency domain resource allocation manner of the terminal based on the predefined or preconfigured priority information, the switched waveform indicated by the network-side device is adjusted and a waveform that matches the current transmission capability of the terminal is used to adapt to the current transmission.

Alternatively, after the terminal receives the first signaling sent by the network-side device, and in a case that the switched waveform indicated by the network-side device does not match the current transmission capability of the terminal or the current frequency domain resource allocation manner of the terminal, the terminal determines a to-be-transmitted waveform of the terminal based on modulation and coding scheme (Modulation and Coding Scheme, MCS) rank information indicated by the network-side device or based on determination information of whether transmit power of the terminal reaches rated power. In this case, the switched waveform indicated by the network-side device is not used.

In practice, after the terminal receives the first signaling sent by the network-side device, the terminal determines the MCS table type indicated by the MCS field based on the switched waveform; and the terminal selects a to-be-used MCS table in a plurality of MCS tables preconfigured or predefined by a network-side device or a higher layer based on the switched waveform and/or the MCS table type.

b. The target field in the first DCI includes: a transmitted precoding matrix indicator (Transmitted Precoding Matrix Indicator, TPMI) field.

Specifically, the TPMI field in the first DCI includes rank (rank) information, where the rank information indicated by the TPMI field and determination information of whether transmit power of the terminal reaches rated power are used for indicating the execution of waveform switch or the switched waveform. For example, the rank information indicated by the TPMI in the first DCI and determination information of whether current transmit power of the terminal is rated power are used to jointly indicate the execution of waveform switch or the switched waveform, as shown in Table 3.

**Table 3**

| **Rank** | **Power** | **Decided waveform** | **Waveform change** |
|---|---|---|---|
| Rank>1 | Not Pc,max | CP | NO |
| Rank=1 | Not Pc,max | CP | NO |
| Rank>1 | Pc,max | CP | NO |
| Rank=1 | Pc,max | DFT | YES |

Optionally, the target field in the first DCI further includes an MCS field; and the TPMI field includes rank information, the rank information indicated by the TPMI field in the first DCI and MCS information indicated by the MCS field are used for indicating the execution of waveform switch or the switched waveform. For example, the rank information indicated by TPMI and specific MCS information in the MCS field are used to jointly indicate the execution of waveform switch or the switched waveform, as shown in Table 4.

**Table 4**

| **Rank** | **MCS** | **Decided waveform** | **Waveform change** |
|---|---|---|---|
| Rank>1 | MCS>QPSK | CP | NO |
| Rank=1 | MCS>QPSK | CP | NO |
| Rank>1 | MCS<=QPSK | CP | NO |
| Rank=1 | MCS<=QPSK | DFT | YES |

Optionally, the rank information indicated by the TPMI field in the first DCI is used for indicating the execution of waveform switch or the switched waveform. For example, only rank information indicated by TPMI is used for implicitly indicating the execution of waveform switch or the switched waveform, as shown in Table 5.

**Table 5**

| **Rank** | **Decided waveform** | **Waveform change** |
|---|---|---|
| Rank>1 | CP | NO |
| Rank=1 | DFT | YES |

In practice, after the terminal receives the first signaling sent by the network-side device, in a case that the switched waveform does not match a transmission capability or the rank information of the terminal, the terminal does not expect the network-side device to simultaneously configure the switched waveform and the rank information, or does not expect the network-side device to simultaneously configure the switched waveform and the transmission capability.

Alternatively, after the terminal receives the first signaling sent by the network-side device, in a case that the switched waveform does not match the transmission capability or the rank information of the terminal, and in a case that the switched waveform includes a DFT-S-OFDM waveform, and the rank information indicates rank is greater than 1, the terminal determines configuration information of the switched waveform based on configuration information of a CP-OFDM waveform being used by the terminal.

Alternatively, after the terminal receives the first signaling sent by the network-side device, in a case that the switched waveform does not match the transmission capability or the rank information of the terminal, and in a case that the switched waveform includes a DFT-S-OFDM waveform, and the rank information indicates rank is greater than 1, the terminal determines configuration information of the switched waveform based on configuration information of a predefined DFT- S-OFDM waveform.

Alternatively, after the terminal receives the first signaling sent by the network-side device, in a case that the switched waveform does not match the transmission capability or the rank information of the terminal, and in a case that the switched waveform includes a DFT-S-OFDM waveform, and the rank information indicates rank is greater than 1, the terminal does not perform waveform switch.
c. The target field in the first DCI includes: an MCS field.

Specifically, after the terminal receives the first signaling sent by the network-side device, the terminal determines the switched waveform based on the MCS rank information indicated by the MCS field; and/or the terminal determines the switched waveform based on the MCS table type indicated by the MCS field. For example, the MCS rank information includes an MCS rank size.

Optionally, adding a new field in the MCS field (for example, an additional new field) is used to indicate the MCS table type. For example, an additional new field in the MCS field includes: type indication information, where the type indication information is used for indicating the MCS table type.

Alternatively, an existing field in the MCS field is reused to indicate the MCS table type. Specifically, M bits LSB or MSB in the MCS field are used for indicating the MCS table type. For example, the MSB bit of MCS is used to dynamically indicate whether a to-be-used MCS table type is mcs-table Transform Precoder or mcs-table.

For Manner 2, the first signaling includes: second DCI, where the second DCI is a group common (Group common) DCI, where the second DCI is used for indicating at least one terminal to perform waveform switch; and the second DCI includes at least one of the following: the dynamic waveform switch enabling indication information; the dynamic waveform switch indication information; and the waveform indication information.

Optionally, the group common DCI can indicate DG uplink transmission and/or indicate CG uplink transmission. A carrying manner of each indication information in the second DCI may include at least one of the following:
1. Define new group common DCI, for example, group common DCI format 2-8, for waveform indication.

Specifically, the second DCI is scrambled by a waveform RNTI (WF-RNTI). The second DCI includes N4 bits, where the N4 bits are used to carry at least one of the following: the dynamic waveform switch enabling indication information, the dynamic waveform switch indication information; and the waveform indication information, and N4 is a positive integer. 2. The existing group common DCI is reused. For example, a new field (for example, an additional new field) is added to the existing group common DCI, for example, group common DCI format 2-2, or an existing field in the existing group common DCI is reused, for example, an existing field (for example, a target field) in group common DCI format 2-2. Specifically:
a. An additional new field in the second DCI includes at least one of the following: the dynamic waveform switch enabling indication information; the dynamic waveform switch indication information; and the waveform indication information.
b. A target field in the second DCI includes at least one of the following: the dynamic waveform switch enabling indication information; the dynamic waveform switch indication information; and the waveform indication information. The target field is, for example, a transmit power control (TPC) command field.

Optionally, the second DCI includes group common DCI format (format) 2-2. A transmission block (block) in the group common DCI format 2-2 includes N5 bits, where the N5 bits are used to carry the dynamic waveform switch indication information or the waveform indication information, and N5 is a positive integer. For example, a new field is added in the block or after the block in the group common DCI format 2-2. The newly added field is used to carry the dynamic waveform switch indication information or the waveform indication information. It may be understood that, in this case, it may be considered that the additional new field is added to the group common DCI format 2-2, or it may also be understood as that the existing field in the group common DCI format 2-2 is reused.

Alternatively, the second DCI includes group common DCI format 2-2. The group common DCI format 2-2 includes an additional new block, where the additional new block is used to carry the dynamic waveform switch indication information or the waveform indication information. For example, the additional new block is specifically used for dynamic waveform switch indication of one or more UEs.

Alternatively, an idle bit in the payload in the group common DCI format 2-2 is used to carry the dynamic waveform switch indication information or the waveform indication information. For example, for a payload size of the second DCI, when a quantity of transmitted bits does not satisfy a maximum quantity of bits configured by the higher layer or DCI alignment is required based on a quantity of bits in a specific field corresponding to the second DCI monitored in common search space, zero padding is not performed on the idle bit, but waveform switch indication or waveform indication is performed by using an idle bit on which zero padding needs to be performed.

Optionally, the TPC command field in the second DCI is used to carry the dynamic waveform switch indication information or the waveform indication information. Specifically, the existing group common DCI format 2-2 is reused and a column of data in the TPC meaning table is added to carry the dynamic waveform switch indication information or the waveform indication information.

Alternatively, the existing group common DCI format 2-2 is reused and whether the waveform changes is indirectly determined through a value of TPC. For example, a power adjustment value indicated once is a maximum value by default or superposition of power adjustment values indicated for a plurality of times exceeds the first threshold P, a corresponding receiving terminal performs waveform switch or indicates that the switched waveform is a DFT-S-OFDM waveform, where the first threshold P is a positive integer greater than 0, as shown in Table 6.

**Table 6**

| **TPC Command Field** | **Accumulated** *δ*_{PUSCH,*b*,*f*,*c*} **or** *δ*_{SRS,*b*,*f*,*c*} **[dB]** | **Absolute** *δ*_{PUSCH,*b*,*f*,*c*} or *δ*_{SRS,*b*,*f*,*c*} **[dB]** | **Waveform** | **Waveform change** |
|---|---|---|---|---|
| 0 | -1 | -4 | CP | NO |
| 1 | 0 | -1 | CP | NO |
| 2 | 1 | 1 | CP | NO |
| 3 | 3 | 4 | DFT | YES |

For Manner 3, the first signaling includes: third DCI, where the third DCI is used for scheduling terminals corresponding to a plurality of PUSCHs of at least one cell in a cell group or at least one carrier in a carrier group to perform dynamic waveform switch; and the third DCI includes at least one of the following: the dynamic waveform switch enabling indication information; the dynamic waveform switch indication information; and the waveform indication information.

A carrying manner of each indication information in the third DCI may include at least one of the following:
1. The third DCI is used for respectively indicating a terminal corresponding to each PUSCH to perform dynamic waveform switch. For example, the third DCI includes N5 bits, where the N5 bits are used to respectively indicate a terminal corresponding to each PUSCH to perform dynamic waveform switch, for example, N5 bits correspond to N5 PUSCHs, each bit indicates the terminal corresponding to the PUSCH in a bitmap-level manner to perform dynamic waveform switch; and N5 is a positive integer. Specifically, the N5 bits are used to carry at least one of the following: the dynamic waveform switch enabling indication information; the dynamic waveform switch indication information; and the waveform indication information.
2. The third DCI is used for respectively indicating each cell or carrier to perform dynamic waveform switch. For example, the third DCI includes N6 bits, where the N6 bits are used to respectively indicate each cell or carrier to perform dynamic waveform switch. For example, N6 bits correspond to N6 cells, and each bit indicates terminals corresponding to all PUSCHs in each cell in a bitmap-level manner to perform dynamic waveform switch; and N6 is a positive integer. Specifically, the N6 bits are used to carry at least one of the following: the dynamic waveform switch enabling indication information; the dynamic waveform switch indication information; and the waveform indication information.
3. The third DCI is used for uniformly indicating terminals corresponding to all PUSCHs to perform dynamic waveform switch. For example, the third DCI includes N7 bits, where the N7 bits are used to uniformly indicate terminals corresponding to all PUSCHs to perform dynamic waveform switch; and the N7 is a positive integer. Specifically, the N7 bits are used to carry at least one of the following: the dynamic waveform switch enabling indication information; the dynamic waveform switch indication information; and the waveform indication information.

Optionally, in a case that a scrambling parameter of a PDCCH corresponding to the third DCI is provided by a primary cell in the cell group, the third DCI is used to indicate terminals corresponding to the plurality of PUSCHs of the primary cell to perform dynamic waveform switch.

Embodiments of this application provide the following manner to implement an indication of the first signaling for the CG uplink transmission.
1. CG-scheduled uplink transmission is determined by DG-scheduled uplink transmission whether to implement waveform switch. Specifically:
   a compliance policy is defined. In the transmission period of the configuration schedule, in a case that actual uplink transmission occurs in the dynamic schedule that is before and closest to a transmission period of a certain configuration schedule, and the transmission waveform of the dynamic schedule changes, the terminal defaults to the uplink transmission starting from the transmission period follows the dynamically scheduled waveform to implement waveform switch or the indication of the target waveform.

For example, during performing CG-scheduled uplink transmission by the terminal, and in a case that a previous DG schedule in a CG-scheduled transmission period performs dynamic waveform switch based on the first signaling, the terminal determines dynamic waveform switch or the switched waveform of the CG-scheduled uplink transmission based on the dynamic waveform switch or the switched waveform of DG-scheduled uplink transmission. FIG. 3 is a schematic diagram 1 of a time sequence relationship and a scheduling process according to an embodiment of this application. Referring to FIG. 3, configured PUSCH (Period PUSCH) may refer to a transmission waveform of DG-PUSCH. When the transmission waveform of DG-PUSCH is different from that of CG-PUSCH, the terminal refers to the indication for the transmission waveform of DG-PUSCH to modify the waveform to implement waveform switch.

For another example, during performing CG-scheduled uplink transmission by the terminal, in a case that a previous CG schedule in a CG-scheduled transmission period does not perform dynamic waveform switch, and a previous DG schedule of the previous CG schedule performs dynamic waveform switch based on the first signaling, the terminal determines the dynamic waveform switch or the switched waveform of the CG-scheduled uplink transmission based on the dynamic waveform switch or the switched waveform of the DG-scheduled uplink transmission.

Optionally, a network sends a dynamic DCI to schedule a certain dynamic PUSCH to completely overlap a certain CG PUSCH resource, thereby implementing waveform switch when CG PUSCH is sent on the resource.

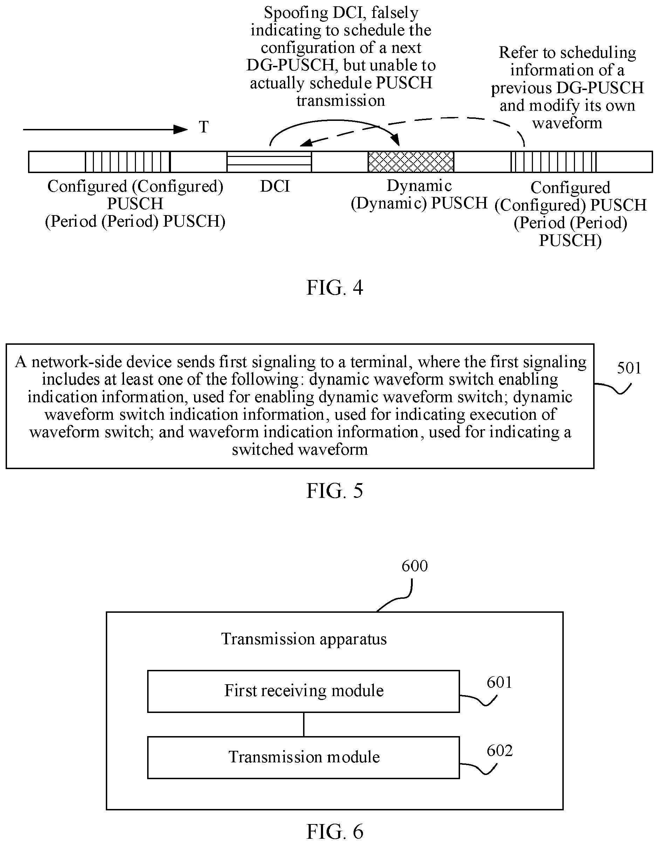

2. The CG-scheduled uplink transmission is determined by a new dynamic DCI signaling whether to implement waveform switch. Specifically:
a new DCI is designed to allow CG to refer to configuration information of the new DCI when DG PUSCH is scheduled. The DCI can still be conventional DCI (for example, DCI scrambled by CS-RNTI). In a transmission period of configuration schedule, in a case that new DCI that is before and closest to a transmission period of a certain configuration schedule has an uplink waveform switch indication or determines a target uplink transmission waveform, and an erroneous indication is given to prevent an actual occurrence of PUSCH transmission later, the uplink transmission starting from the transmission period may follow a dynamically scheduled waveform to implement waveform switch or an indication of the target waveform. This scheme does not require actual uplink transmission. It may be understood that "spoofing DCI" is sent closest to a certain transmission period, indicating only some basic changes and waveform changes (for example, only indicating a reserve MCS level and waveform switch or a target waveform), so that the uplink transmission of the configuration schedule may complete changes of the target waveform to implement waveform switch. FIG. 4 is a schematic diagram 2 of a time sequence relationship and a scheduling process according to an embodiment of this application. Referring to FIG. 4, CG-PUSCH may modify waveform configuration of the CG-PUSCH by referring to scheduling information of spoofing DCI.

For example, in a case that the terminal performs CG-scheduled uplink transmission, and the first signaling is only used to indicate that in the second DG schedule, dynamic waveform switch is performed or indicate the switched waveform, the terminal determines dynamic waveform switch or the switched waveform of the CG-scheduled uplink transmission based on the dynamic waveform switch or the switched waveform indicated by the first signaling, where the second DG schedule is the one that is before and closest to the CG-scheduled transmission period.

3. Indication information of waveform switch is configured in activation DCI (NDI=0) and retransmission DCI (NDI=1). The activation DCI may be CS-RNTI scrambled DCI, and an indication manner is the same as common DCI. The manner is only applicable to CG-type 2. For example, the terminal performs CG Type 2 PUSCH transmission based on the first signaling, where the first signaling is activation DCI or retransmission DCI.

4. Defining or configuring dynamic waveform switch indication cannot be supported in uplink transmission of configuration schedule Type 1 or Type 2. Alternatively, it is considered that the uplink transmission of configuration schedules of both types cannot support waveform dynamic switch.

Optionally, after the terminal receives first signaling sent by a network-side device, the method further includes any one of the following:
the terminal determines the switched waveform based on the format type of the first DCI. For example, in a case that it is considered that format 0_1 is generally used for transmission in eMBB scenarios, a CP waveform is used for the transmission of format 0_1, and if it is considered that format 0_2 is generally used for transmission in URLLC scenarios, the DFT-S-OFDM waveform is used for the transmission of format 0_2.

The terminal determines the switched waveform based on priority information indicated by a priority indicator (priority indicator) field of the first DCI. For example, a second threshold N is set. For a service with a priority higher than N, the CP-OFDM waveform is used for transmission; and for a service with a priority lower than N, the DFT-S-OFDM waveform is used for transmission.

Optionally, in a case that the switched waveform includes a DFT-S-OFDM waveform and a quantity of allocated frequency field PRBs is not an integer multiple of 2, 3, or 5, the terminal does not expect to be indicated or switched to the DFT-S-OFDM waveform in a case that the quantity of allocated frequency field PRBs is not an integer multiple of 2, 3, or 5; or
in a case that the switched waveform includes a DFT-S-OFDM waveform and a quantity of allocated frequency field PRBs is not an integer multiple of 2, 3, or 5, the terminal selects a PRB number close to an integer multiple of 2, 3, or 5 for transmission; or the network-side device indicates the terminal to use a PRB number that is an integral multiple of 2, 3, or 5 for transmission.

FIG. 5 is a schematic flowchart 2 of a transmission method according to an embodiment of this application. As shown in FIG. 5, the method includes:
Step 501: A network-side device sends first signaling to a terminal, where the first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform.

It should be noted that, the embodiments of this application may be applied to the wireless communication system that supports the dynamic waveform switch, and the terminal supports the dynamic waveform switch. The terminal includes, but not limited to, the types of terminals 11 listed above, and the network-side device includes, but not limited to, the types of network-side devices 12 listed above. This is not limited in this application. It may be understood that, the embodiments of this application may further be used in a scenario with an unlicense frequency band.

Optionally, the switched waveform may include a CP-OFDM waveform or a DFT-S-OFDM waveform. It may be understood that, the switched waveform may be a waveform used by a PUSCH for the terminal to send uplink data to the network-side device, or may be a waveform used for PSSCH transmission for sidelink communication between terminals.

In the transmission method provided in the embodiments of this application, when waveform switch is required, the network-side device sends the first signaling to the terminal. The terminal may obtain at least one of the following through parsing the first signaling: dynamic waveform switch enabling indication information, dynamic waveform switch indication information, and waveform indication information. Then, the terminal performs uplink transmission based on the waveform determined by the first signaling. In this way, transmission performance of the terminal can be effectively improved.

For the transmission method provided in the embodiments of this application, an execution body may be a transmission apparatus. In the embodiments of this application, an example in which the transmission apparatus executes the transmission method is used to describe the transmission apparatus provided in the embodiments of this application.

FIG. 6 is a schematic structural diagram 1 of a transmission apparatus according to an embodiment of this application. As shown in FIG. 6, the transmission apparatus 600 is applied to a terminal and includes:
a first receiving module 601, configured to receive first signaling sent by a network-side device, where the first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform; and
a transmission module 602, configured to perform uplink transmission based on a waveform determined by the first signaling.

In the transmission apparatus provided in the embodiments of this application, after receiving the first signaling sent by the network-side device, the terminal may obtain at least one of the following through parsing the first signaling: dynamic waveform switch enabling indication information, dynamic waveform switch indication information, and waveform indication information. Then, the terminal performs uplink transmission based on the waveform determined by the first signaling, which can effectively improve transmission performance of the terminal.

Optionally, the uplink transmission includes at least one of the following:
dynamic grant DG physical uplink shared channel PUSCH transmission;
configured grant type 1 CG Type 1 PUSCH transmission;
configured grant type 2 CG Type 2 PUSCH transmission;
message 3 Msg.3 transmission scheduled by random access response uplink grant RAR UL grant;
PUSCH transmission scheduled by a downlink control information format DCI format 0_0 scrambled by a temporary cell radio network temporary identifier TC-RNTI;
physical uplink control channel PUCCH transmission;
physical sidelink shared channel PSSCH transmission for sidelink communication; and
physical sidelink control channel PSCCH transmission for sidelink communication.

Optionally, the apparatus further includes at least one of the following:
a first sending module, configured to report capability information to the network-side device, where the capability information is used for indicating that the terminal supports dynamic waveform switch;
a second receiving module, configured to receive second signaling sent by the network-side device, where the second signaling is used for enabling the dynamic waveform switch, and the terminal enables the waveform switch in response to the second signaling; and
a default module, configured by default as enabling waveform switch.

Optionally, the first signaling includes first DCI, and the first DCI is used for scheduling a single UE to perform dynamic waveform switch, where
the first DCI includes at least one of the following:
the dynamic waveform switch enabling indication information;
the dynamic waveform switch indication information; and
the waveform indication information.

Optionally, an additional new field in the first DCI includes at least one of the following:
the dynamic waveform switch enabling indication information;
the dynamic waveform switch indication information; and
the waveform indication information.

Optionally, a target field in the first DCI includes at least one of the following:
the dynamic waveform switch enabling indication information;
the dynamic waveform switch indication information; and
the waveform indication information.

Optionally, the target field in the first DCI includes: an FDRA field.

Optionally, the FDRA field includes N1 bits and N2 bits, where the N1 bits are used to indicate a frequency domain resource allocation manner, the N1 bits and the N2 bits are used to carry the dynamic waveform switch indication information or the waveform indication information, and N1 and N2 are both positive integers;
or
the FDRA field includes N3 bits, where the N3 bits are used to indicate a frequency domain resource allocation manner, the N3 bits are used to carry the dynamic waveform switch indication information or the waveform indication information, and N3 is a positive integer.

Optionally, the apparatus further includes any one of the following:
a first expectation module, configured to not expect the network-side device to simultaneously configure the switched waveform and the frequency domain resource allocation manner, or not expect the network-side device to simultaneously configure the switched waveform and the transmission capability in a case that the switched waveform does not match a transmission capability of the terminal or a frequency domain resource allocation manner of the terminal;
a first determining module, configured to determine, in a case that the switched waveform does not match the transmission capability of the terminal or the frequency domain resource allocation manner of the terminal, the switched waveform or the frequency domain resource allocation manner based on predefined or preconfigured priority information; and
a second determining module, configured to determine, in a case that the switched waveform does not match the transmission capability of the terminal or the frequency domain resource allocation manner of the terminal, a to-be-transmitted waveform of the terminal based on modulation and coding scheme MCS rank information indicated by the network-side device or based on determination information of whether transmit power of the terminal reaches rated power.

Optionally, the apparatus further includes:
a third determining module, configured to determine an MCS table type indicated by an MCS field based on the switched waveform; and
a selection module, configured to select a to-be-used MCS table in a plurality of preconfigured or predefined MCS tables based on the switched waveform and/or the MCS table type.

Optionally, the target field in the first DCI includes: a transmitted precoding matrix indicator TPMI field.

Optionally, the TPMI field includes rank information, where the rank information indicated by the TPMI field and determination information of whether transmit power of the terminal reaches rated power are used for indicating the execution of waveform switch or the switched waveform;
or
rank information indicated by the TPMI field is used for indicating the execution of waveform switch or the switched waveform.

Optionally, the target field further includes an MCS field, the TPMI field includes rank information; and
the rank information indicated by the TPMI field and MCS information indicated by the MCS field are used for indicating the execution of waveform switch or the switched waveform.

Optionally, the apparatus further includes at least one of the following:
a second expectation module, configured to not expect, in a case that the switched waveform does not match a transmission capability or the rank information of the terminal, the network-side device to simultaneously configure the switched waveform and the rank information, or not expect the network-side device to simultaneously configure the switched waveform and the transmission capability;
a fourth determining module, configured to determine, in a case that the switched waveform includes a discrete Fourier transform spread orthogonal frequency division multiplexing DFT-S-OFDM waveform, and the rank information indicates rank is greater than 1, configuration information of the switched waveform based on configuration information of a CP-OFDM waveform being used by the terminal;
a fifth determining module, configured to determine, in a case that the switched waveform includes the DFT-S-OFDM waveform, and the rank information indicates rank is greater than 1, the configuration information of the switched waveform based on configuration information of a predefined DFT- S-OFDM waveform; and
an execution module, configured to skip, in a case that the switched waveform includes the DFT-S-OFDM waveform, and the rank information indicates rank is greater than 1, performing waveform switch.

Optionally, the target field in the first DCI includes: an MCS field.

Optionally, the apparatus further includes any one of the following:
a sixth determining module, configured to determine the switched waveform based on MCS rank information indicated by the MCS field; and
a seventh determining module, configured to determine the switched waveform based on MCS table type indicated by the MCS field.

Optionally, an additional new field in the MCS field includes: type indication information, where the type indication information is used for indicating the MCS table type.

Optionally, M bits LSB or MSB in the MCS field are used for indicating the MCS table type.

Optionally, the first signaling includes second DCI, and the second DCI is a group common DCI; and
the second DCI is used for indicating at least one terminal to perform waveform switch, where the second DCI includes at least one of the following:
the dynamic waveform switch enabling indication information;
the dynamic waveform switch indication information; and
the waveform indication information.

Optionally, the second DCI is scrambled by a waveform WF-RNTI; and
the second DCI includes N4 bits, where the N4 bits are used to carry the dynamic waveform switch indication information or the waveform indication information, and N4 is a positive integer.

Optionally, an additional new field in the second DCI includes at least one of the following:
the dynamic waveform switch enabling indication information;
the dynamic waveform switch indication information; and
the waveform indication information.

Optionally, a target field in the second DCI includes at least one of the following:
the dynamic waveform switch enabling indication information;
the dynamic waveform switch indication information; and
the waveform indication information.

Optionally, the transmit power control TPC command field in the second DCI is used to carry the dynamic waveform switch indication information or the waveform indication information.

Optionally, the apparatus further includes:
an eighth determining module, configured to determine, during performing CG-scheduled uplink transmission by the terminal, and in a case that a previous DG schedule in a CG-scheduled transmission period performs dynamic waveform switch based on the first signaling, dynamic waveform switch or the switched waveform of the CG-scheduled uplink transmission based on the dynamic waveform switch or the switched waveform of DG-scheduled uplink transmission; or
to determine, during performing CG-scheduled uplink transmission by the terminal, in a case that a previous CG schedule in a CG-scheduled transmission period does not perform dynamic waveform switch, and a previous DG schedule of the previous CG schedule performs dynamic waveform switch based on the first signaling, the dynamic waveform switch or the switched waveform of the CG-scheduled uplink transmission based on the dynamic waveform switch or the switched waveform of the DG-scheduled uplink transmission.

Optionally, the apparatus further includes:
a ninth determining module, configured to determine, in a case that the terminal performs CG-scheduled uplink transmission, and the first signaling is only used to indicate that in the second DG schedule, dynamic waveform switch is performed or indicate the switched waveform, dynamic waveform switch or the switched waveform of the CG-scheduled uplink transmission based on the dynamic waveform switch or the switched waveform indicated by the first signaling, where the second DG schedule is the one that is before and closest to the CG-scheduled transmission period.

Optionally, the transmission module performs CG Type 2 PUSCH transmission based on the first signaling, where the first signaling is activation DCI or retransmission DC.

Optionally, the apparatus further includes:
a tenth determining module, configured to determine the switched waveform based on a format type of the first DCI; and
an eleventh determining module, configured to determine the switched waveform based on priority information indicated by a priority indicator field of the first DCI.

Optionally, the first signaling includes third DCI, the third DCI is used for scheduling terminals corresponding to a plurality of PUSCHs of at least one cell in a cell group or at least one carrier in a carrier group to perform dynamic waveform switch, where
the third DCI includes at least one of the following:
the dynamic waveform switch enabling indication information;
the dynamic waveform switch indication information; and
the waveform indication information.

Optionally, the third DCI is used for respectively indicating a terminal corresponding to each PUSCH to perform dynamic waveform switch;
or
the third DCI is used for respectively indicating each cell or carrier to perform dynamic waveform switch;
   or
the third DCI is used for uniformly indicating terminals corresponding to all PUSCHs to perform dynamic waveform switch.

Optionally, the third DCI includes N5 bits, where the N5 bits are used to respectively indicate a terminal corresponding to each PUSCH to perform dynamic waveform switch, and N5 is a positive integer;
or
the third DCI includes N6 bits, where the N6 bits are used to respectively indicate each cell or carrier to perform dynamic waveform switch, and N6 is a positive integer;
   or
the third DCI includes N7 bits, where the N7 bits are used to uniformly indicate terminals corresponding to all PUSCHs to perform dynamic waveform switch, and N7 is a positive integer.

Optionally, in a case that a scrambling parameter of a PDCCH corresponding to the third DCI is provided by a primary cell in the cell group, the third DCI is used to indicate terminals corresponding to the plurality of PUSCHs of the primary cell to perform dynamic waveform switch.

Optionally, the apparatus further includes:
a third expectation module, configured to not expect, in a case that the switched waveform includes a DFT-S-OFDM waveform and a quantity of allocated frequency field PRBs is not an integer multiple of 2, 3, or 5, to be indicated or switched to the DFT-S-OFDM waveform in a case that the quantity of allocated frequency field PRBs is not an integer multiple of 2, 3, or 5;
   or
to select, in a case that the switched waveform includes a DFT-S-OFDM waveform and a quantity of allocated frequency field PRBs is not an integer multiple of 2, 3, or 5, a PRB number close to an integer multiple of 2, 3, or 5 for transmission; or the network-side device indicates the terminal to use a PRB number that is an integral multiple of 2, 3, or 5 for transmission.

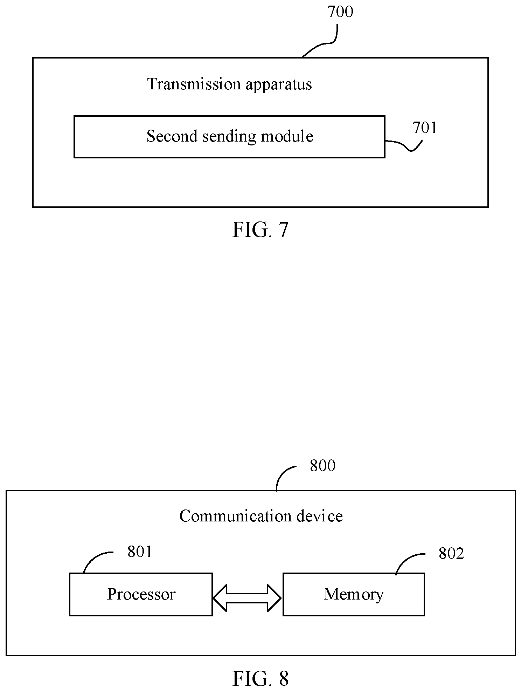

FIG. 7 is a schematic structural diagram 2 of a transmission apparatus according to an embodiment of this application. As shown in FIG. 7, the transmission apparatus 700 is applied to a network-side device and includes:
a second sending module 701, configured to send first signaling to a terminal, The first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform.

In the transmission apparatus provided in the embodiments of this application, when waveform switch is required, the first signaling is sent to the terminal. The terminal may obtain at least one of the following through parsing the first signaling: dynamic waveform switch enabling indication information, dynamic waveform switch indication information, and waveform indication information. Then, the terminal performs uplink transmission based on the waveform determined by the first signaling, which can effectively improve transmission performance of the terminal.

Optionally, the first signaling includes first DCI, and the first DCI is used for scheduling a single UE to perform dynamic waveform switch, where
the first DCI includes at least one of the following:
the dynamic waveform switch enabling indication information;
the dynamic waveform switch indication information; and
the waveform indication information.

Optionally, an additional new field in the first DCI includes at least one of the following:
the dynamic waveform switch enabling indication information;
the dynamic waveform switch indication information; and
the waveform indication information.

Optionally, a target field in the first DCI includes at least one of the following:
the dynamic waveform switch enabling indication information;
the dynamic waveform switch indication information; and
the waveform indication information.

Optionally, the target field in the first DCI includes: an FDRA field.

Optionally, the FDRA field includes N1 bits and N2 bits, where the N1 bits are used to indicate a frequency domain resource allocation manner, the N1 bits and the N2 bits are used to carry the dynamic waveform switch indication information or the waveform indication information, and N1 and N2 are both positive integers;
or
the FDRA field includes N3 bits, where the N3 bits are used to indicate a frequency domain resource allocation manner, the N3 bits are used to carry the dynamic waveform switch indication information or the waveform indication information, and N3 is a positive integer.

Optionally, the target field in the first DCI includes: a transmitted precoding matrix indicator TPMI field.

Optionally, the TPMI field includes rank information, where the rank information indicated by the TPMI field and determination information of whether transmit power of the terminal reaches rated power are used for indicating the execution of waveform switch or the switched waveform;
or
rank information indicated by the TPMI field is used for indicating the execution of waveform switch or the switched waveform.

Optionally, the target field further includes an MCS field, the TPMI field includes rank information; and
the rank information indicated by the TPMI field and MCS information indicated by the MCS field are used for indicating the execution of waveform switch or the switched waveform.

Optionally, the target field in the first DCI includes: an MCS field.

Optionally, an additional new field in the MCS field includes: type indication information, where the type indication information is used for indicating the MCS table type.

Optionally, M bits LSB or MSB in the MCS field are used for indicating the MCS table type.

Optionally, the first signaling includes second DCI, and the second DCI is a group common DCI; and
the second DCI is used for indicating at least one terminal to perform waveform switch, where the second DCI includes at least one of the following:
the dynamic waveform switch enabling indication information;
the dynamic waveform switch indication information; and
the waveform indication information.

Optionally, the second DCI is scrambled by a waveform WF-RNTI; and
the second DCI includes N4 bits, where the N4 bits are used to carry the dynamic waveform switch indication information or the waveform indication information, and N4 is a positive integer.

Optionally, an additional new field in the second DCI includes at least one of the following:
the dynamic waveform switch enabling indication information;
the dynamic waveform switch indication information; and
the waveform indication information.

Optionally, a target field in the second DCI includes at least one of the following:
the dynamic waveform switch enabling indication information;
the dynamic waveform switch indication information; and
the waveform indication information.

Optionally, the transmit power control TPC command field in the second DCI is used to carry the dynamic waveform switch indication information or the waveform indication information.

Optionally, the first signaling includes third DCI, the third DCI is used for scheduling terminals corresponding to a plurality of PUSCHs of at least one cell in a cell group or at least one carrier in a carrier group to perform dynamic waveform switch, where
the third DCI includes at least one of the following:
the dynamic waveform switch enabling indication information;
the dynamic waveform switch indication information; and
the waveform indication information.

Optionally, the third DCI is used for respectively indicating a terminal corresponding to each PUSCH to perform dynamic waveform switch;
or
the third DCI is used for respectively indicating each cell or carrier to perform dynamic waveform switch;
   or
the third DCI is used for uniformly indicating terminals corresponding to all PUSCHs to perform dynamic waveform switch.

Optionally, the third DCI includes N5 bits, where the N5 bits are used to respectively indicate a terminal corresponding to each PUSCH to perform dynamic waveform switch, and N5 is a positive integer;
or
the third DCI includes N6 bits, where the N6 bits are used to respectively indicate each cell or carrier to perform dynamic waveform switch, and N6 is a positive integer;
   or
the third DCI includes N7 bits, where the N7 bits are used to uniformly indicate terminals corresponding to all PUSCHs to perform dynamic waveform switch, and N7 is a positive integer.

Optionally, in a case that a scrambling parameter of a PDCCH corresponding to the third DCI is provided by a primary cell in the cell group, the third DCI is used to indicate terminals corresponding to the plurality of PUSCHs of the primary cell to perform dynamic waveform switch.

The transmission apparatus in the embodiments of this application may be an electronic device, for example, an electronic device having an operating system, or may be a component, for example, an integrated circuit or a chip in an electronic device. The operating system may be an Android (Android) operating system, may be an ios operating system, or may be another possible operating system. This is not specifically limited in the embodiments of this application. The electronic device may be a terminal or may be another device other than a terminal. For example, the terminal may include, but not limited to, the types of the terminal 11 listed above, and another device may be a server, a network attached storage (Network Attached Storage, NAS), and the like. This is not specifically limited in the embodiments of this application.

The transmission apparatus provided in the embodiments of this application can implement all processes implemented by the method embodiments from FIG. 2 to FIG. 3, and the same technical effects are achieved. To avoid repetition, details are not described herein again.

FIG. 8 is a schematic structural diagram of a communication device according to an embodiment of this application. As shown in FIG. 8, the communication device 800 includes a processor 801, a memory 802, and a program or instructions stored in the memory 802 and executable on the processor 801. For example, when the communication device 800 is a terminal, when the program or the instructions are executed by the processor 801, all steps of foregoing terminal-side transmission method embodiment are implemented, and the same technical effects can be achieved. When the communication device 800 is a network-side device, when the program or the instructions are executed by the processor 801, all steps of the foregoing network-side device side transmission method embodiment are implemented, and the same technical effects can be achieved. To avoid repetition, details are not described herein again.

An embodiment of this application further provides a terminal, including a processor and a communication interface, where the communication interface is configured to:
receive first signaling sent by a network-side device, where the first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform; and
perform uplink transmission based on a waveform determined by the first signaling.

The terminal embodiment corresponds to the foregoing terminal-side method embodiment, and the various implementation processes and implementations of the foregoing method embodiments can be applied to the terminal embodiment, and can achieve the same technical effects.

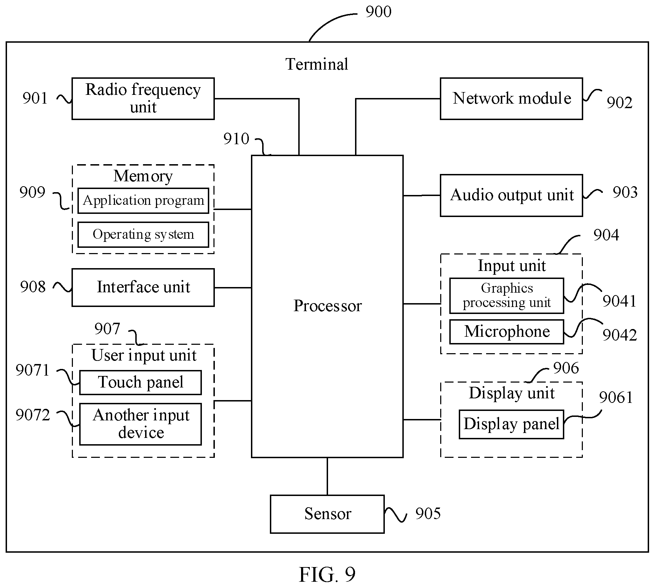

FIG. 9 is a schematic structural diagram of a terminal according to embodiments of this application. As shown in FIG. 9, the terminal 900 includes, but not limited to, at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 further includes a power supply (such as a battery) for supplying power to the components. The power supply may logically connect to the processor 910 by using a power supply management system, thereby implementing functions, such as charging, discharging, and power consumption management, by using the power supply management system. A terminal structure shown in FIG. 9 does not constitute a limitation to the terminal, and the terminal may include more or fewer components than those shown in the figure, or some components may be combined, or a different component deployment may be used. Details are not described herein again.

It should be understood that, in the embodiments of this application, the input unit 904 may include a graphics processing unit (Graphics Processing Unit, GPU) 9041 and a microphone 9042. The graphics processing unit 9041 performs processing on image data of a static picture or a video that is obtained by an image acquisition apparatus (for example, a camera) in a video acquisition mode or an image acquisition mode. The display unit 906 may include a display panel 9061, for example, the display panel 9061 may be configured in a form such as a liquid crystal display or an organic light-emitting diode. The user input unit 907 includes at least one of a touch panel 9071 and another input device 9072. The touch panel 9071 is also referred to as a touch screen. The touch panel 9071 may include two parts: a touch detection apparatus and a touch controller. The another input device 9072 may include, but not limited to, a physical keyboard, a functional key (such as a volume control key or a switch key), a track ball, a mouse, and a joystick, and details are not described herein again.

In the embodiments of this application, after receiving downlink data from a network-side device, the radio frequency unit 901 may transmit the downlink data to the processor 910 for processing. In addition, the radio frequency unit 901 may send uplink data to the network-side device. Generally, the radio frequency unit 901 includes, but not limited to, an antenna, an amplifier, a transceiver, a coupler, a low noise amplifier, a duplexer, and the like.

The memory 909 may be configured to store a software program or instructions and various data. The memory 909 may mainly include a first storage region for storing a program or instructions and a second storage region for storing data. The first storage region may store an operating system, an application program or instructions required by at least one function (for example, a sound playback function and an image playback function), or the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory(Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (random access memory, RAM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDRSDRAM), an enhanced synchronous dynamic random access memory (enhanced SDRAM, ESDRAM), a synch link dynamic random access memory (synch link DRAM, SLDRAM), and a direct rambus random access memory (direct rambus RAM, DRRAM), and the like. The memory 909 in the embodiments of this application includes, but not limited to, these memories and any other suitable types of memories.

The processor 910 may include one or more processing units. Optionally, the processor 910 integrates an application processor and a modem processor. The application processor mainly processes operations involving an operating system, a user interface, an application program, and the like. The modem processor mainly processes a wireless communication signal, for example, a baseband processor. It may be understood that the foregoing modem processor may not be integrated into the processor 910.

The radio frequency unit 901 is configured to:
receive first signaling sent by a network-side device, where the first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform; and
perform uplink transmission based on a waveform determined by the first signaling.

After receiving the first signaling sent by the network-side device, the terminal provided in the embodiments of this application may obtain at least one of the following through parsing the first signaling: dynamic waveform switch enabling indication information, dynamic waveform switch indication information, and waveform indication information. Then, the terminal performs uplink transmission based on the waveform determined by the first signaling, which can effectively improve transmission performance of the terminal.

An embodiment of this application further provides a network-side device, including a processor and a communication interface. The communication interface is configured to send first signaling to a terminal, where the first signaling includes at least one of the following: dynamic waveform switch enabling indication information, used for enabling dynamic waveform switch; dynamic waveform switch indication information, used for indicating execution of waveform switch; and waveform indication information, used for indicating a switched waveform.

The network-side device embodiment corresponds to the foregoing network-side device method embodiment, and the various implementation processes and implementations of the foregoing method embodiments can be applied to the network-side device embodiment, and can achieve the same technical effect.

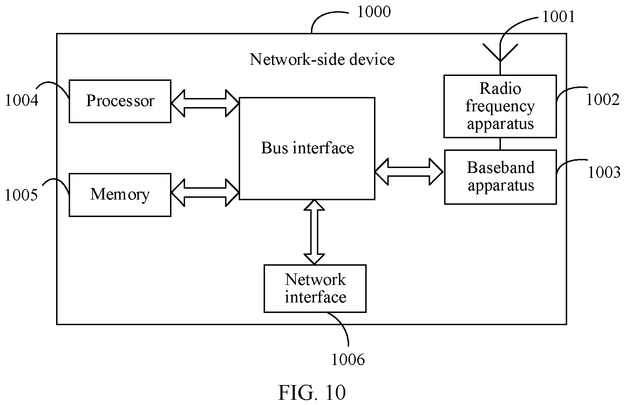

FIG. 10 is a schematic structural diagram of a network-side device according to an embodiment of this application. As shown in FIG. 10, the network-side device 1000 includes: an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001 and sends the received information to the baseband apparatus 1003 for processing. In a downlink direction, the baseband apparatus 1003 processes information that needs to be sent and sends the information to the radio frequency apparatus 1002. The radio frequency apparatus 1002 processes the received information and sends the received information through the antenna 1001.

The method executed by the network-side device in the foregoing embodiment may be implemented in the baseband apparatus 1003. The baseband apparatus 1003 includes a baseband processor.

The baseband apparatus 1003 may include, for example, at least one baseband plate. A plurality of chips are disposed on the baseband plate. As shown in FIG. 10, one of the plurality of chips is, for example, the baseband processor, and is connected to the memory 1005 through a bus interface, to invoke a program in the memory 1005 to perform a network device operation shown in the foregoing method embodiment.

The network-side device may further include a network interface 1006, and the interface is, for example, a common public radio interface (Common Public Radio Interface, CPRI).

Specifically, the network-side device 1000 in the embodiments of the present invention further includes: instructions or a program stored in the memory 1005 and executable on the processor 1004. The processor 1004 invokes the instructions or the program in the memory 1005 to perform the steps of the foregoing transmission method, and can achieve the same technical effects. To avoid repetition, details are not described herein again.

An embodiment of this application further provides an information indication system, including: a terminal and a network-side device, where the terminal may be configured to perform steps of the transmission method as described above, and the network-side device may be configured to perform steps of the transmission method as described above.

An embodiment of this application further provides a readable storage medium. The readable storage medium may be volatile or non-volatile. The readable storage medium stores a program or instructions. When the program or instructions are executed by a processor, all processes of the foregoing transmission method embodiments are implemented, and the same technical effects can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, including a processor and a communication interface, where the communication interface is coupled to the processor, and the processor is configured to run a program or instructions, to implement all processes of the foregoing transmission method embodiments, and can achieve the same technical effects. To avoid repetition, details are not described herein again.

It should be understood that, the chip described in the embodiments of this application may also be referred to as a system-level chip, a system chip, a chip system, a system on chip, or the like.

An embodiment of this application further provides a computer program/program product, where the computer program/program product is stored in a storage medium and executed by at least one processor to implement all processes of the foregoing transmission method embodiments, and can achieve the same technical effects. To avoid repetition, details are not described herein again.

It should be noted that the terms "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the embodiments of this application is not limited to performing the functions in the order shown or discussed, but also can include performing the functions in basically the same way or in the opposite order according to the functions involved, for example, the described methods may be performed in a different order from the described ones, and various steps can also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the conventional technologies may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art may make various variations without departing from the scope of this application and the protection of the claims, and such variations shall fall within the protection of this application.

## Claims

1. A transmission method, comprising:
receiving, by a terminal, first signaling sent by a network-side device, wherein
the first signaling comprises at least one of the following:
dynamic waveform switch enabling indication information, used for enabling dynamic waveform switch;
dynamic waveform switch indication information, used for indicating execution of waveform switch; and
waveform indication information, used for indicating a switched waveform; and
performing, by the terminal, uplink transmission based on a waveform determined by the first signaling.

2. The transmission method according to claim 1, wherein the uplink transmission comprises at least one of the following:
dynamic grant DG physical uplink shared channel PUSCH transmission;
configured grant type 1 CG Type 1 PUSCH transmission;
configured grant type 2 CG Type 2 PUSCH transmission;
message 3 Msg.3 transmission scheduled by random access response uplink grant RAR UL grant;
PUSCH transmission scheduled by a downlink control information DCI format format 0_0 scrambled by a temporary cell radio network temporary identifier TC-RNTI;
physical uplink control channel PUCCH transmission;
physical sidelink shared channel PSSCH transmission for sidelink communication; and
physical sidelink control channel PSCCH transmission for sidelink communication.

3. The transmission method according to claim 1, wherein the method further comprises at least one of the following that:
the terminal reports capability information to the network-side device, wherein the capability information is used for indicating that the terminal supports the dynamic waveform switch;
the terminal is configured by default as enabling waveform switch; and
the terminal receives second signaling sent by the network-side device, wherein the second signaling is used for enabling the dynamic waveform switch, and the terminal enables the waveform switch in response to the second signaling.

4. The transmission method according to any one of claims 1 to 3, wherein the first signaling comprises first DCI, and the first DCI is used for scheduling a single UE to perform dynamic waveform switch, wherein
the first DCI comprises at least one of the following:
the dynamic waveform switch enabling indication information;
the dynamic waveform switch indication information; and
the waveform indication information.

5. The transmission method according to claim 4, wherein an additional new field in the first DCI comprises at least one of the following:
the dynamic waveform switch enabling indication information;
the dynamic waveform switch indication information; and
the waveform indication information.

6. The transmission method according to claim 4, wherein a target field in the first DCI comprises at least one of the following:
the dynamic waveform switch enabling indication information;
the dynamic waveform switch indication information; and
the waveform indication information.

7. The transmission method according to claim 6, wherein the target field in the first DCI comprises: a frequency domain resource allocation FDRA field.

8. The transmission method according to claim 7, wherein the FDRA field comprises N1 bits and N2 bits, wherein the N1 bits are used to indicate a frequency domain resource allocation manner, the N1 bits and the N2 bits are used to carry the dynamic waveform switch indication information or the waveform indication information, and N1 and N2 are both positive integers;
or
the FDRA field comprises N3 bits, wherein the N3 bits are used to indicate a frequency domain resource allocation manner, the N3 bits are used to carry the dynamic waveform switch indication information or the waveform indication information, and N3 is a positive integer.

9. The transmission method according to claim 8, wherein after the receiving, by a terminal, first signaling sent by a network-side device, the method further comprises any one of the following that:
in a case that the switched waveform does not match a transmission capability of the terminal or a frequency domain resource allocation manner of the terminal, the terminal does not expect the network-side device to simultaneously configure the switched waveform and the frequency domain resource allocation manner, or does not expect the network-side device to simultaneously configure the switched waveform and the transmission capability;
in the case that the switched waveform does not match the transmission capability of the terminal or the frequency domain resource allocation manner of the terminal, the terminal determines the switched waveform or the frequency domain resource allocation manner based on predefined or preconfigured priority information; and
in the case that the switched waveform does not match the transmission capability of the terminal or the frequency domain resource allocation manner of the terminal, the terminal determines a to-be-transmitted waveform of the terminal based on modulation and coding scheme MCS rank information indicated by the network-side device or based on determination information of whether transmit power of the terminal reaches rated power.

10. The transmission method according to any one of claims 1 to 3, wherein after the receiving, by a terminal, first signaling sent by a network-side device, the method further comprises:
determining, by the terminal, an MCS table type indicated by an MCS field based on the switched waveform; and
selecting, by the terminal, a to-be-used MCS table in a plurality of preconfigured or predefined MCS tables based on the switched waveform and/or the MCS table type.

11. The transmission method according to claim 6, wherein the target field in the first DCI comprises: a transmitted precoding matrix indicator TPMI field.

12. The transmission method according to claim 11, wherein the TPMI field comprises rank information, the rank information indicated by the TPMI field and determination information of whether transmit power of the terminal reaches rated power are used for indicating the execution of waveform switch or the switched waveform;
or
the rank information indicated by the TPMI field is used for indicating the execution of waveform switch or the switched waveform.

13. The transmission method according to claim 11, wherein the target field further comprises an MCS field, the TPMI field comprises rank information; and
the rank information indicated by the TPMI field and MCS information indicated by the MCS field are used for indicating the execution of waveform switch or the switched waveform.

14. The transmission method according to claim 12, wherein after the receiving, by a terminal, first signaling sent by a network-side device, the method further comprises any one of the following:
in a case that the switched waveform does not match a transmission capability or the rank information of the terminal, not expecting, by the terminal, the network-side device to simultaneously configure the switched waveform and the rank information, or not expecting the network-side device to simultaneously configure the switched waveform and the transmission capability;
in a case that the switched waveform comprises a discrete Fourier transform spread orthogonal frequency division multiplexing DFT-S-OFDM waveform, and the rank information indicates rank is greater than 1, determining, by the terminal, configuration information of the switched waveform based on configuration information of a CP-OFDM waveform being used by the terminal;
in the case that the switched waveform comprises the DFT-S-OFDM waveform, and the rank information indicates rank is greater than 1, determining, by the terminal, the configuration information of the switched waveform based on configuration information of a predefined DFT- S-OFDM waveform; and
in the case that the switched waveform comprises the DFT-S-OFDM waveform, and the rank information indicates rank is greater than 1, skipping performing, by the terminal, waveform switch.

15. The transmission method according to claim 6, wherein the target field in the first DCI comprises: an MCS field.

16. The transmission method according to claim 15, wherein after the receiving, by a terminal, first signaling sent by a network-side device, the method further comprises any one of the following:
determining, by the terminal, the switched waveform based on MCS rank information indicated by the MCS field; and
determining, by the terminal, the switched waveform based on MCS table type indicated by the MCS field.

17. The transmission method according to claim 16, wherein an additional new field in the MCS field comprises: type indication information, wherein the type indication information is used for indicating the MCS table type.

18. The transmission method according to claim 16, wherein M bits LSB or MSB in the MCS field are used for indicating the MCS table type.

19. The transmission method according to any one of claims 1 to 3, wherein the first signaling comprises second DCI, and the second DCI is a group common DCI;
the second DCI is used for indicating at least one terminal to perform waveform switch, wherein the second DCI comprises at least one of the following:
the dynamic waveform switch enabling indication information;
the dynamic waveform switch indication information; and
the waveform indication information.

20. The transmission method according to claim 19, wherein the second DCI is scrambled by a waveform WF-RNTI; and
the second DCI comprises N4 bits, wherein the N4 bits are used to carry the dynamic waveform switch indication information or the waveform indication information, and N4 is a positive integer.

21. The transmission method according to claim 19, wherein an additional new field in the second DCI comprises at least one of the following:
the dynamic waveform switch enabling indication information;
the dynamic waveform switch indication information; and
the waveform indication information.

22. The transmission method according to claim 19, wherein a target field in the second DCI comprises at least one of the following:
the dynamic waveform switch enabling indication information;
the dynamic waveform switch indication information; and
the waveform indication information.

23. The transmission method according to claim 19, wherein a transmit power control TPC command field in the second DCI is used to carry the dynamic waveform switch indication information or the waveform indication information.

24. The transmission method according to claim 2, wherein the method further comprises:
during performing CG-scheduled uplink transmission by the terminal, and in a case that a previous DG schedule in a CG-scheduled transmission period performs dynamic waveform switch based on the first signaling, determining, by the terminal, dynamic waveform switch or a switched waveform of the CG-scheduled uplink transmission based on dynamic waveform switch or a switched waveform of DG-scheduled uplink transmission;
or
during performing the CG-scheduled uplink transmission by the terminal, in a case that a previous CG schedule in the CG-scheduled transmission period does not perform dynamic waveform switch, and a previous DG schedule of the previous CG schedule performs dynamic waveform switch based on the first signaling, determining, by the terminal, the dynamic waveform switch or the switched waveform of the CG-scheduled uplink transmission based on the dynamic waveform switch or the switched waveform of the DG-scheduled uplink transmission.

25. The transmission method according to claim 2, wherein the method further comprises:
in a case that the terminal performs CG-scheduled uplink transmission, and the first signaling is only used to indicate that in a second DG schedule, dynamic waveform switch is performed or indicate the switched waveform, determining, by the terminal, dynamic waveform switch or a switched waveform of the CG-scheduled uplink transmission based on the dynamic waveform switch or the switched waveform indicated by the first signaling, wherein
the second DG schedule is before and closest to a CG-scheduled transmission period.

26. The transmission method according to claim 2, wherein the terminal performs the CG Type 2 PUSCH transmission based on the first signaling, wherein the first signaling is activation DCI or retransmission DCI.

27. The transmission method according to claim 4, wherein after the receiving, by a terminal, first signaling sent by a network-side device, the method further comprises any one of the following:
determining, by the terminal, the switched waveform based on a format type of the first DCI; and
determining, by the terminal, the switched waveform based on priority information indicated by a priority indicator field of the first DCI.

28. The transmission method according to any one of claims 1 to 3, wherein the first signaling comprises third DCI, the third DCI is used for scheduling terminals corresponding to a plurality of PUSCHs of at least one cell in a cell group or at least one carrier in a carrier group to perform dynamic waveform switch, wherein
the third DCI comprises at least one of the following:
the dynamic waveform switch enabling indication information;
the dynamic waveform switch indication information; and
the waveform indication information.

29. The transmission method according to claim 28, wherein the third DCI is used for respectively indicating a terminal corresponding to each PUSCH to perform dynamic waveform switch;
or
the third DCI is used for respectively indicating each cell or carrier to perform dynamic waveform switch;
or
the third DCI is used for uniformly indicating terminals corresponding to all PUSCHs to perform dynamic waveform switch.

30. The transmission method according to claim 28, wherein the third DCI comprises N5 bits, the N5 bits are used to respectively indicate a terminal corresponding to each PUSCH to perform dynamic waveform switch, and N5 is a positive integer;
or
the third DCI comprises N6 bits, wherein the N6 bits are used to respectively indicate each cell or carrier to perform dynamic waveform switch, and N6 is a positive integer;
or
the third DCI comprises N7 bits, wherein the N7 bits are used to uniformly indicate terminals corresponding to all PUSCHs to perform dynamic waveform switch, and N7 is a positive integer.

31. The transmission method according to claim 28, wherein in a case that a scrambling parameter of a PDCCH corresponding to the third DCI is provided by a primary cell in the cell group, the third DCI is used to indicate terminals corresponding to a plurality of PUSCHs of the primary cell to perform dynamic waveform switch.

32. The transmission method according to any one of claims 1 to 3, wherein the method further comprises:
in a case that the switched waveform comprises a DFT-S-OFDM waveform and a quantity of allocated frequency field PRBs is not an integer multiple of 2, 3, or 5, not expecting, by the terminal, to be indicated or switched to the DFT-S-OFDM waveform in a case that the quantity of allocated frequency field PRBs is not the integer multiple of 2, 3, or 5;
or
in a case that the switched waveform comprises a DFT-S-OFDM waveform and a quantity of allocated frequency field PRBs is not an integer multiple of 2, 3, or 5, selecting, by the terminal, a PRB number close to the integer multiple of 2, 3, or 5 for transmission; or indicating, by the network-side device, the terminal to use a PRB number that is the integral multiple of 2, 3, or 5 for transmission.

33. A transmission method, comprising:
transmitting, by a network-side device, first signaling to a terminal, wherein
the first signaling comprises at least one of the following:
dynamic waveform switch enabling indication information, used for enabling dynamic waveform switch;
dynamic waveform switch indication information, used for indicating execution of waveform switch; and
waveform indication information, used for indicating a switched waveform.

34. The transmission method according to claim 33, wherein the first signaling comprises first DCI, and the first DCI is used for scheduling a single UE to perform dynamic waveform switch, wherein
the first DCI comprises at least one of the following:
the dynamic waveform switch enabling indication information;
the dynamic waveform switch indication information; and
the waveform indication information.

35. The transmission method according to claim 33, wherein the first signaling comprises second DCI, and the second DCI is a group common DCI;
the second DCI is used for indicating at least one terminal to perform waveform switch, wherein the second DCI comprises at least one of the following:
the dynamic waveform switch enabling indication information;
the dynamic waveform switch indication information; and
the waveform indication information.

36. The transmission method according to claim 33, wherein the first signaling comprises third DCI, the third DCI is used for scheduling terminals corresponding to a plurality of PUSCHs of at least one cell in a cell group or at least one carrier in a carrier group to perform dynamic waveform switch, wherein
the third DCI comprises at least one of the following:
the dynamic waveform switch enabling indication information;
the dynamic waveform switch indication information; and
the waveform indication information.

37. A data transmission apparatus, comprising:
a first receiving module, configured to receive first signaling sent by a network-side device, wherein
the first signaling comprises at least one of the following:
dynamic waveform switch enabling indication information, used for enabling dynamic waveform switch;
dynamic waveform switch indication information, used for indicating execution of waveform switch;
waveform indication information, used for indicating a switched waveform; and
a transmission module, configured to perform uplink transmission based on a waveform determined by the first signaling.

38. A data transmission apparatus, comprising:
a second sending module, configured to send first signaling to a terminal, wherein
the first signaling comprises at least one of the following:
dynamic waveform switch enabling indication information, used for enabling dynamic waveform switch;
dynamic waveform switch indication information, used for indicating execution of waveform switch; and
waveform indication information, used for indicating a switched waveform.

39. A terminal, comprising a processor, a memory, and a program or instructions stored in the memory and executable on the processor, wherein when the program or the instructions are executed by the processor, steps of the transmission method according to any one of claims 1 to 32 are implemented.

40. A network-side device, comprising a processor, a memory, and a program or instructions stored in the memory and executable on the processor, wherein when the program or instructions are executed by the processor, steps of the transmission method according to any one of claims 33 to 36 are implemented.

41. A readable storage medium, storing a program or instructions, wherein when the program or instructions are executed by a processor, steps of the transmission method according to any one of claims 1 to 32 are implemented, or steps of the transmission method according to any one of claims 33 to 36 are implemented.
